# FASCICULE DE BREVET EUROPEEN

(11) **EP 3 359 423 B1**
(45) Date de publication et mention de la délivrance du brevet: **30.10.2019**
(21) Numéro de dépôt: 16785195.5
(22) Date de dépôt: 16.09.2016
(51) Int. Cl.: B60R 13/08

(54) **ENSEMBLE POUR CHÂSSIS DE VEHICULE AUTOMOBILE**
ANORDNUNG FÜR EINE KRAFTFAHRZEUGKAROSSERIE
ASSEMBLY FOR A MOTOR VEHICLE CHASSIS

(30) Priorité: 05.10.2015 FR 1559427
(43) Date de publication de la demande: 15.08.2018
(73) Titulaire: PSA AUTOMOBILES S.A., 78300 Poissy (FR)
(72) Inventeur: TALLET, Frederic, 70200 Moffans et Vacheresse (FR)
(86) Numéro de dépôt international: PCT/FR2016/052346
(87) Numéro de publication internationale: WO 2017/060580

(56) Documents cités:
- EP-A1- 2 522 825
- FR-A1- 2 999 230
- JP-A- 2014 080 059
- US-A1- 2002 185 893

## Description

La présente invention porte sur un ensemble pour châssis de véhicule automobile. L'invention trouve une application particulièrement avantageuse, mais non exclusive, avec les véhicules automobiles de type utilitaire.

JP 2014 080059 A divulgue un ensemble pour châssis de véhicule selon le préambule de la revendication 1.

De façon connue en soi, un ensemble pour châssis de véhicule automobile comporte un plancher s'étendant sensiblement le long du véhicule suivant un axe longitudinal. Dans certaines architectures de véhicule, en particulier les véhicules utilitaires, un écran thermique est positionné entre le plancher et une ligne d'échappement. Cet écran de protection thermique permet de protéger des éléments implantés en sous-caisse d'une surchauffe.

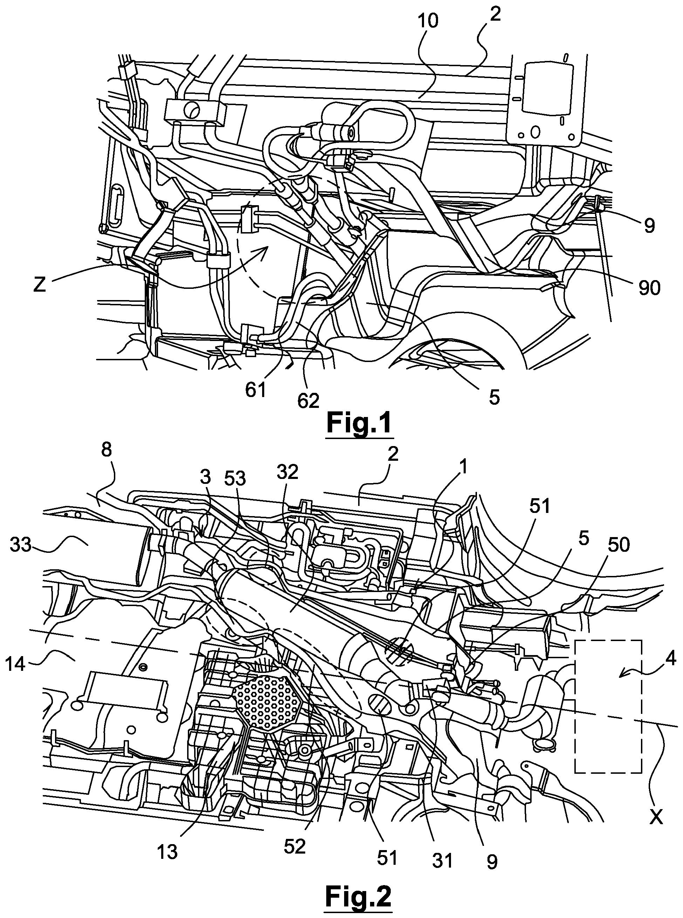

Toutefois, comme cela est visible en figure 1, il existe une zone ouverte Z entre le plancher 2 et l'écran thermique 5 constituant un couloir dans lequel l'air chauffé par le groupe motopropulseur est susceptible de s'engouffrer, ce qui provoque la surchauffe des éléments sous le plancher; tels que des canalisations de frein, des canalisations de carburant 61, 62, un circuit de climatisation additionnel, un réservoir d'agent réducteur pour système de réduction catalytique sélective (ou SCR pour "Selective Catalytic Reduction" en anglais), ou un réservoir de carburant. En outre, la forme classique de l'écran thermique 5 à angles saillants présente l'inconvénient de dévier le flux d'air chaud issu du compartiment moteur vers les éléments précités, ce qui est également susceptible d'engendrer des anomalies de fonctionnement.

L'invention vise à remédier efficacement à au moins un de ces inconvénients en proposant un ensemble pour châssis de véhicule selon la revendication 1.

L'invention permet ainsi d'éviter la surchauffe des éléments situés dans le couloir formé par la zone ouverte et d'éviter également la détérioration de leur fonctionnement. L'invention permet en outre de s'affranchir de protections spécifiques, telles que des patchs ou gaines thermiques destinées à chaque élément sensible à la chaleur, tel qu'un réservoir de carburant ou un réservoir d'agent réducteur.

Selon une réalisation, des canalisations s'étendent longitudinalement entre ledit écran thermique et ledit plancher.

Selon une réalisation, ledit écran thermique comporte au moins une portion emboutie pour autoriser le passage de canalisations sous ledit écran thermique.

Selon une réalisation, ladite portion emboutie est bombée de manière à guider l'air chaud à l'intérieur dudit tunnel vers l'arrière dudit véhicule.

Selon une réalisation, ledit écran thermique comporte une portion de forme courbe ayant un changement de rayon de courbure.

Selon une réalisation, ladite portion de forme courbe est positionnée entre ladite ligne d'échappement et un réservoir tel qu'un réservoir d'agent réducteur pour système de réduction catalytique sélective. Ainsi, la portion de forme courbe présente une forme en S allongée permettant de convoyer l'air vers l'arrière tout en évitant à l'air chaud circulant dans le tunnel d'être dévié vers le réservoir d'agent réducteur.

Selon une réalisation, ledit écran thermique comporte au moins une portion de dégagement, ladite portion de dégagement étant réalisée dans une paroi latérale dudit écran thermique de manière à autoriser le passage d'un organe de fixation pour fixer ledit écran thermique audit plancher. On évite ainsi de détériorer l'écran thermique qui est généralement réalisé en aluminium gaufré.

Selon une réalisation, ledit ensemble comporte en outre une pièce de maintien de l'écran thermique munie de moyens de fixation pour maintenir en place des canalisations, telles que des canalisations de carburant.

Selon une réalisation, ledit plancher est sensiblement plat.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une vue en perspective de la zone ouverte située entre le plancher et l'écran thermique dans une configuration suivant l'état de la technique;
La figure 2 est une vue de dessous d'un ensemble pour châssis selon la présente invention;
La figure 3 est une vue en perspective détaillée de l'écran thermique selon la présente invention obturant au moins partiellement la zone ouverte;
La figure 4 est une vue de dessous sur laquelle l'écran thermique selon l'invention représenté en transparence fait apparaître la pièce de maintien et les canalisations correspondantes s'étendant entre le plancher et l'écran thermique;
La figure 5 est une vue de dessous sur laquelle l'écran thermique selon l'invention représenté en transparence fait apparaître le conduit d'aérotherme passant derrière une portion emboutie;

Les éléments identiques, similaires, ou analogues conservent la même référence d'une figure à l'autre.

La figure 2 montre un ensemble 1 pour châssis de véhicule automobile selon la présente invention comportant un plancher 2 s'étendant sensiblement le long du véhicule suivant un axe longitudinal X. Ce plancher 2 sensiblement plat présente une face interne et une face externe. Dans la description qui suit, on entend par "face externe" une face destinée à être orientée vers le sol en condition de roulage du véhicule et par "face interne" une face destinée à être orientée du côté opposé au sol en condition de roulage du véhicule, c'est-à-dire du côté de l'habitacle du véhicule. Et les termes relatifs comme "avant" ou "arrière" s'entendent respectivement par rapport au côté avant et au côté arrière du véhicule, un bord "avant" d'une pièce étant ainsi tourné vers l'avant du véhicule et un bord "arrière" étant tourné vers l'arrière du véhicule en condition de roulage en marche avant.

L'ensemble 1 comporte également une ligne d'échappement 3 pour des gaz issus d'une combustion réalisée dans un moteur thermique situé dans le compartiment moteur 4. La ligne d'échappement 3 est située du côté de la face externe du plancher 2. Cette ligne d'échappement 3 comprend notamment un conduit d'échappement 31 et un catalyseur 32 appartenant à un système de réduction sélective catalytique SCR (acronyme pour "Selective Catalytic Reduction" en anglais) permettant de réduire chimiquement les oxydes d'azote présents dans les gaz d'échappement. La ligne 3 comporte également un silencieux 33 en partie arrière.

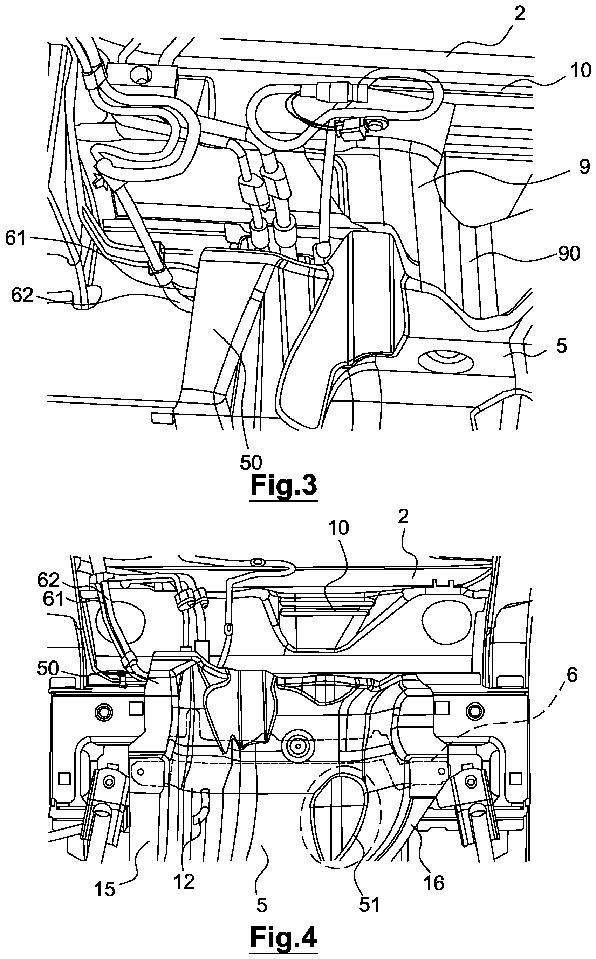

Par ailleurs, l'ensemble 1 comporte un écran thermique 5 positionné entre la ligne d'échappement 3 et le plancher 2. Du fait des éléments sous-caisse à éviter, tels que des réseaux de canalisations, le réservoir de carburant 14, et le réservoir d'agent réducteur 13, l'écran thermique 5 présente une direction d'allongement légèrement en travers par rapport à l'axe longitudinal X. L'écran thermique 5 définit un tunnel dans lequel est positionnée la ligne d'échappement 3. En l'occurrence, l'écran 5 présente une forme allongée en U ouvert vers le sol (lorsque le véhicule est en condition de roulage). Deux rebords 15, 16 saillants s'étendant le long des parois latérales du U permettent la fixation de l'écran 5 avec le plancher 2 (cf. figure 4).

Plus précisément, comme cela est bien visible en figure 3, l'écran thermique 5 comporte, du côté du compartiment moteur 4, une portion 50 remontant en direction du compartiment moteur 4 de manière à guider l'air chaud issu du compartiment moteur 4 à l'intérieur du tunnel formé par l'écran thermique 5. Ainsi, la portion 50 obture au moins partiellement la zone ouverte Z située entre le plancher 2 et l'écran thermique 5 de manière à créer un effet d'entonnoir pour guider l'air chaud dans le tunnel. Une telle configuration permet de convoyer l'air chaud du compartiment moteur 4 vers l'arrière du véhicule en évitant la surchauffe des éléments sous-caisse.

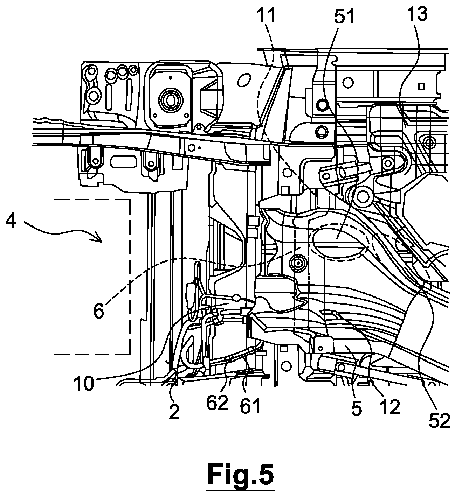

En outre, l'écran thermique 5 comporte deux portions embouties 51 qui permettent chacune le passage de canalisations sous l'écran 5. L'emboutissement est réalisé de telle façon que le creux de chaque portion emboutie 51 est positionné du côté du plancher 2 et que la partie bombée 51 est dirigée vers le sol. Les portions embouties 51 sont bombées de manière à guider l'air chaud à l'intérieur du tunnel vers l'arrière du véhicule. Les portions bombées 51 présentent des grands rayons de courbure de manière à éviter de créer des turbulences susceptibles d'engendrer une déviation du flux d'air vers les éléments sous-caisse. La portion emboutie 51 située dans la partie haute de l'écran 5 sur la figure 5 pourra par exemple être prévue pour autoriser le passage d'une canalisation 11 d'aérotherme; tandis que la portion emboutie 51 située dans la partie basse de l'écran 5 sur la figure 5 pourra par exemple être prévue pour autoriser le passage de canalisations de freins 12 derrière l'écran thermique 5.

L'écran thermique 5 comporte également une portion de forme courbe 52 ménagée dans une paroi latérale du U. Cette portion de forme courbe 52 s'étend entre la ligne d'échappement 3 et le réservoir d'agent réducteur 13 pour le système SCR. La portion de forme courbe 52 présente un changement de rayon de courbure de manière à avoir globalement une forme en S allongée. Une telle forme permet de maintenir la paroi latérale de l'écran 5 à distance du réservoir d'agent réducteur 13, tout en évitant la déviation de l'air chaud vers ledit réservoir 13.

Par ailleurs, deux portions de dégagement arrondies 53 sont réalisées dans chaque paroi latérale de l'écran thermique 5. Ces portions de dégagement 53 permettent le passage d'un organe de fixation pour solidariser l'écran thermique 5 avec le plancher 2. Chaque portion de dégagement 53 est telle que la distance séparant les deux parois latérales de l'écran 5 augmente progressivement jusqu'à un maximum d'écartement local pour ensuite diminuer progressivement jusqu'à un minimum d'écartement local. Les organes de fixation consistent par exemple en des écrous associés à des collerettes de grande surface afin de maximiser la surface d'appui sur l'écran thermique 5. On évite ainsi de détériorer l'écran thermique 5 qui est généralement réalisé en aluminium gaufré.

L'écran thermique 5 est de préférence réalisé en une seule pièce. Toutefois, en variante, il pourra être réalisé en plusieurs pièces, de telle façon que la portion d'obturation 50 pourra être une pièce rapportée qui est fixée sur le corps de l'écran 5.

Une pièce 6 est plaquée contre la périphérie interne de l'écran 5 et s'étend transversalement par rapport à une direction d'allongement longitudinale de l'écran 5. A cet effet, la pièce 6 présente une forme en U complémentaire de l'écran 5. Cette pièce 6 vise à assurer le maintien de l'écran thermique 5 au plancher 2. Avantageusement, la pièce 6 est munie de moyens de fixation qui maintiennent en place des canalisations, telles que des canalisations de carburant aller 61 et retour 62. Du point de vue du compartiment moteur 4, les canalisations de carburant 61, 62 passent derrière la portion d'obturation 50 de l'écran thermique 5 et sont plaquées contre la structure du véhicule de manière à ce que l'écran thermique 5 recouvre l'ensemble.

Par ailleurs, l'ensemble 1 comporte en plus de l'écran thermique 5, un écran thermique 8, dit écran arrière, et un écran thermique 9, dit écran de tablier. L'écran thermique arrière 8 est situé dans le prolongement de l'écran 5 et est destiné à recevoir le silencieux 33 de la ligne d'échappement 3. L'écran arrière 8 s'étend sensiblement le long du véhicule suivant l'axe longitudinal X.

L'écran de tablier 9 est monté entre un tablier 10 et l'écran thermique 5 du véhicule. On rappelle que le tablier 10 issu du plancher 2 est une paroi qui assure une séparation entre l'intérieur de l'habitacle et le compartiment moteur 4 du véhicule. L'écran de tablier 9 présente une portion bombée 90 orientée de manière à pouvoir casser une vague générée lors d'un passage au gué. La portion bombée 90 est dirigée vers le sol et est orientée sensiblement perpendiculairement à une direction d'avancement de la vague. Cela permet de protéger l'écran 5 d'un éventuel arrachement par la vague. Cette forme aérodynamique permet en outre de ne pas perturber le convoyage de l'air chaud sous-caisse.

L'écran de tablier 9 et l'écran 5 se superposent l'un par rapport à l'autre dans une zone de jonction. La zone de jonction entre l'écran de tablier 9 et l'écran 5 est de préférence non linéaire en présentant une forme courbe ayant au moins un changement de rayon de courbure. Une telle configuration d'assemblage permet notamment de garantir un bon contact d'appui entre les deux écrans 5 et 9, ainsi que d'améliorer les prestations thermiques en supprimant l'espace entre les écrans 5 et 9, et les prestations phoniques en évitant que les écrans 5 et 9 vibrent en cours d'utilisation du véhicule.

## Revendications

1. Ensemble (1) pour châssis de véhicule comportant:
- un plancher (2) destiné à s'étendre sensiblement le long du véhicule suivant un axe longitudinal (X),
- une ligne d'échappement (3) pour des gaz issus d'une combustion dans un moteur thermique situé dans un compartiment moteur (4),
- un écran thermique (5) définissant un tunnel dans lequel est positionnée ladite ligne d'échappement (3),
- un tablier (10) issu du plancher, et
- un écran de tablier (9) qui est monté entre l'écran thermique (5) et le tablier (10),
ledit écran thermique (5) comportant, du côté du compartiment moteur (4), une portion (50) remontant en direction dudit compartiment moteur (4) de manière à guider un air chaud à l'intérieur dudit tunnel défini par l'écran thermique (5), **caractérisé en ce que** le tablier (10) comporte une portion bombée (90) orientée de manière à pouvoir casser une vague générée lors d'un passage au gué, ladite portion bombée (90) étant dirigée vers le sol et étant orientée sensiblement perpendiculairement à une direction d'avancement de ladite vague.

2. Ensemble selon la revendication 1, **caractérisé en ce que** des canalisations (11, 12, 61, 62) s'étendent longitudinalement entre ledit écran thermique et ledit plancher.

3. Ensemble selon la revendication 1 ou 2, **caractérisé en ce que** ledit écran thermique (5) comporte au moins une portion emboutie (51) pour autoriser le passage de canalisations (11, 12) sous ledit écran thermique (5).

4. Ensemble selon la revendication 3, **caractérisé en ce que** ladite portion emboutie (51) est bombée de manière à guider l'air chaud à l'intérieur dudit tunnel vers l'arrière dudit véhicule.

5. Ensemble selon l'une quelconque des revendications 1 à 4, **caractérisé en ce que** ledit écran thermique (5) comporte une portion de forme courbe (52) ayant un changement de rayon de courbure.

6. Ensemble selon la revendication 5, **caractérisé en ce que** ladite portion de forme courbe (52) est positionnée entre ladite ligne d'échappement (3) et un réservoir tel qu'un réservoir d'agent réducteur pour système de réduction catalytique sélective (13).

7. Ensemble selon l'une quelconque des revendications 1 à 6, **caractérisé en ce que** ledit écran thermique (5) comporte au moins une portion de dégagement (53), ladite portion de dégagement (53) étant réalisée dans une paroi latérale dudit écran thermique (5) de manière à autoriser le passage d'un organe de fixation pour fixer ledit écran thermique (5) audit plancher (2).

8. Ensemble selon l'une quelconque des revendications 1 à 7, **caractérisé en ce qu'**il comporte en outre une pièce de maintien (6) de l'écran thermique (5) munie de moyens de fixation pour maintenir en place des canalisations, telles que des canalisations de carburant (61, 62).

9. Ensemble selon l'une quelconque des revendications 1 à 8, **caractérisé en ce que** ledit plancher (2) est sensiblement plat.

10. Ensemble selon l'une des revendications précédentes, **caractérisé en ce que** l'écran thermique (5) présente une forme allongée en U ouvert vers le sol et comprend de préférence deux rebords saillants (15,16) s'étendant le long des parois latérales du U pour fixer l'écran (5) au plancher (2).

11. Ensemble selon l'une des revendications précédentes, **caractérisé en ce que** la portion (50) de l'écran thermique (5) obture au moins partiellement la zone (Z) située entre le plancher (2) et l'écran thermique (5).

12. Ensemble selon l'une des revendications précédentes, **caractérisé en ce que** l'écran thermique (5) est réalisé en une seule pièce.

13. Ensemble selon l'une des revendications précédentes, **caractérisé en ce qu'**il comprend aussi un écran thermique arrière (8) situé dans le prolongement de l'écran thermique (5) et notamment destiné à recevoir le silencieux (33) de la ligne d'échappement (3).

14. Ensemble selon l'une des revendications précédentes, **caractérisé en ce que** l'écran de tablier (9) et l'écran thermique (5) se superposent l'un par rapport à l'autre dans une zone de jonction, ladite zone de jonction étant de préférence non linéaire et présentant une forme courbe ayant au moins un changement de rayon de courbure.

## Patentansprüche

1. Anordnung (1) für Fahrzeugkarosserie, die Folgendes umfasst:
- einen Fußboden (2), der dazu bestimmt ist, sich im Wesentlichen entlang des Fahrzeugs entlang einer Längsachse (X) zu erstrecken,
- einen Abgasstrang (3) für Gase, die aus einer Verbrennung in einer Brennkraftmaschine, die sich in einem Motorraum (4) befindet, hervorgehen,
- einen Wärmeschild (5), der einen Tunnel definiert, in dem der Abgasstrang (3) positioniert ist,
- eine Stirnwand (10), die aus dem Fußboden hervorgeht, und
- einen Stirnwandschild (9), der zwischen dem Wärmeschild (5) und der Stirnwand (10) montiert ist,
wobei der Wärmeschild (5) auf der Seite des Motorraums (4) einen Abschnitt (50) umfasst, der in Richtung des Motorraums (4) derart aufsteigt, dass eine warme Luft in dem Inneren des Turms, der von dem Wärmeschild (5) definiert ist, geführt wird, **dadurch gekennzeichnet, dass** die Stirnwand (10) einen gewölbten Abschnitt (90) umfasst, der derart ausgerichtet ist, dass er eine Welle brechen kann, die bei einer Furtpassage erzeugt wird, wobei der gewölbte Abschnitt (90) zu dem Boden gerichtet ist und im Wesentlichen senkrecht zu einer Fortpflanzungsrichtung der Welle ausgerichtet ist.

2. Anordnung nach Anspruch 1, **dadurch gekennzeichnet, dass** sich Kanalisationen (11, 12, 61, 62) längs zwischen dem Wärmeschild und dem Fußboden erstrecken.

3. Anordnung nach Anspruch 1 oder 2, **dadurch gekennzeichnet, dass** der Wärmeschild (5) mindestens einen gestanzten Abschnitt (51) umfasst, um das Durchgehen von Kanalisationen (11, 12) unter dem Wärmeschild (5) zu gestatten.

4. Anordnung nach Anspruch 3, **dadurch gekennzeichnet, dass** der gestanzte Abschnitt (51) derart gewölbt ist, dass er Warmluft in dem Inneren des Tunnels zu der Rückseite des Fahrzeugs führt.

5. Anordnung nach einem der Ansprüche 1 bis 4, **dadurch gekennzeichnet, dass** der Wärmeschild (5) einen Abschnitt in gebogener Form (52) umfasst, der einen Biegungsradiuswechsel aufweist.

6. Anordnung nach Anspruch 5, **dadurch gekennzeichnet, dass** der Abschnitt mit gebogener Form (52) zwischen dem Abgasstrang (3) und einem Behälter, wie einem Reduktionsmittelbehälter für System zur selektiven katalytischen Reduktion (13), positioniert ist.

7. Anordnung nach einem der Ansprüche 1 bis 6, **dadurch gekennzeichnet, dass** der Wärmeschild (5) mindestens einen Aussparungsabschnitt (53) umfasst, wobei der Aussparungsabschnitt (53) in einer Seitenwand des Wärmeschilds (5) derart hergestellt ist, dass er das Durchgehen eines Befestigungsorgans zum Befestigen des Wärmeschilds (5) an dem Fußboden (2) gestattet.

8. Anordnung nach einem der Ansprüche 1 bis 7, **dadurch gekennzeichnet, dass** sie außerdem ein Halteteil (6) des Wärmeschilds (5), umfasst, das mit Befestigungsmitteln versehen ist, um Kanalisationen, wie Kraftstoffkanalisationen (61, 62), an Ort und Stelle zu halten.

9. Anordnung nach einem der Ansprüche 1 bis 8, **dadurch gekennzeichnet, dass** der Fußboden (2) im Wesentlichen flach ist.

10. Anordnung nach einem der vorstehenden Ansprüche, **dadurch gekennzeichnet, dass** der Wärmeschild (5) eine längliche U-Form aufweist, die zu dem Boden offen ist und bevorzugt zwei vorragende Ränder (15, 16) umfasst, die sich entlang der Seitenwände des U erstrecken, um den Schild (5) auf dem Boden (2) zu befestigen.

11. Anordnung nach einem der vorstehenden Ansprüche, **dadurch gekennzeichnet, dass** der Abschnitt (50) des Wärmeschilds (5) die Zone (Z), die zwischen dem Fußboden (2) und dem Wärmeschild (5) liegt, mindestens teilweise verschließt.

12. Anordnung nach einem der vorstehenden Ansprüche, **dadurch gekennzeichnet, dass** der Wärmeschild (5) aus einem einzigen Stück hergestellt ist.

13. Anordnung nach einem der vorstehenden Ansprüche, **dadurch gekennzeichnet, dass** sie auch einen hinteren Wärmeschild (8) umfasst, der in der Verlängerung des Wärmeschilds (5) liegt und insbesondere dazu bestimmt ist, den Schalldämpfer (33) des Abgasstrangs (3) aufzunehmen.

14. Anordnung nach einem der vorstehenden Ansprüche, **dadurch gekennzeichnet, dass** der Stirnwandschild (9) und der Wärmeschild (5) einander in einer Verbindungszone überlagern, wobei die Verbindungszone bevorzugt nicht linear ist und eine gebogene Form aufweist, die mindestens einen Biegungsradiuswechsel aufweist.

## Claims

1. An assembly (1) for a vehicle chassis comprising:
- a floor (2) intended to extend substantially along the vehicle following a longitudinal axis (X),
- an exhaust line (3) for gases resulting from a combustion in a heat engine situated in an engine compartment (4),
- a heat screen (5) defining a tunnel in which said exhaust line (3) is positioned,
- an apron (10) originating from the floor, and
- an apron screen (9) which is mounted between the heat screen (5) and the apron (10),
said heat screen (5) comprising, on the side of the engine compartment (4), a portion (50) rising towards said engine compartment (4) so as to guide hot air to the interior of said tunnel defined by the heat screen (5), **characterized in that** the apron (10) comprises a rounded portion (90) oriented so as to be able to break a wave generated during crossing a ford, said rounded portion (90) being directed towards the ground and being oriented substantially perpendicularly to a direction of advancing of said wave.

2. The assembly according to Claim 1, **characterized in that** ducts (11, 12, 61, 62) extend longitudinally between said heat screen and said floor.

3. The assembly according to Claim 1 or 2, **characterized in that** said heat screen (5) comprises at least one stamped portion (51) to permit the passage of ducts (11, 12) beneath said heat screen (5).

4. The assembly according to Claim 3, **characterized in that** said stamped portion (51) is rounded so as to guide the hot air in the interior of said tunnel towards the rear of said vehicle.

5. The assembly according to any one of Claims 1 to 4, **characterized in that** said heat screen (5) comprises a curve-shaped portion (52) having a change of radius of curvature.

6. The assembly according to Claim 5, **characterized in that** said curve-shaped portion (52) is positioned between said exhaust line (3) and a reservoir such as a reservoir of reducing agent for a selective catalytic reduction system (13).

7. The assembly according to any one of Claims 1 to 6, **characterized in that** said heat screen (5) comprises at least one clearance portion (53), said clearance portion (53) being formed in a lateral wall of said heat screen (5) so as to permit the passage of an attachment member for attaching said heat screen (5) to said floor (2).

8. The assembly according to any one of Claims 1 to 7, **characterized in that** it further comprises a retention part (6) of the heat screen (5) provided with attachment means to keep ducts in place, such as fuel ducts (61, 62).

9. The assembly according to any one of Claims 1 to 8, **characterized in that** said floor (2) is substantially flat.

10. The assembly according to one of the preceding claims, **characterized in that** the heat screen (5) has an elongated U-shaped form, open towards the ground and preferably includes two projecting edges (15, 16) extending along the lateral walls of the U to attach the screen (5) to the floor (2).

11. The assembly according to one of the preceding claims, **characterized in that** the portion (50) of the heat screen (5) at least partially closes the zone (Z) situated between the floor (2) and the heat screen (5) .

12. The assembly according to one of the preceding claims, **characterized in that** the heat screen (5) is made in a single piece.

13. The assembly according to one of the preceding claims, **characterized in that** it also includes a rear heat screen (8) situated in the extension of the heat screen (5) and in particular intended to receive the silencer (33) of the exhaust line (3).

14. The assembly according to one of the preceding claims, **characterized in that** the apron screen (9) and the heat screen (5) are superimposed one with respect to the other in a junction zone, said junction zone being preferably non-linear and having a curved shape having at least one change of radius of curvature.
